# EUROPÄISCHE PATENTANMELDUNG

(11) **EP 4 056 419 A1**
(43) Veröffentlichungstag der Anmeldung: **14.09.2022**
(21) Anmeldenummer: 22020101.6
(22) Anmeldetag: 10.03.2022
(51) Int. Cl.: B60P 3/40

(54) **VORRICHTUNG ZUM HALTEN EINES ENDES EINES LÄNGLICHEN OBJEKTS, INSBESONDERE EINER SELBSTTRAGENDEN LAST, SOWIE EIN FAHRZEUG ZUM TRANSPORT EINES DERARTIGEN LÄNGLICHEN OBJEKTS**

(30) Priorität: 11.03.2021 DE 102021001301; 11.03.2021 DE 202021000916 U
(71) Anmelder: Scheuerle Fahrzeugfabrik GmbH, 74629 Pfedelbach (DE)
(72) Erfinder: Dückmann, Peter, 74629 Pfedelbach (DE); Plett, Andreas, 74629 Pfedelbach (DE); Petzold, Steffen, 74629 Pfedelbach (DE)
(74) Vertreter: Leitner, Waldemar

(57) **Zusammenfassung**

Die Erfindung betrifft eine Vorrichtung zum Halten eines Endes eines länglichen Objekts, insbesondere einer selbsttragenden Last, die ein Grundgestell (11) aufweist, an dem eine Halterung, an welcher das längliche Objekt befestigbar ist, verschwenkbar angeordnet ist, und die mindestens eine Betätigungseinrichtungseinrichtung aufweist, durch welche die Halterung relativ zu dem auf einer Transportfläche (8) eines Transportfahrzeugs (1) angeordneten Grundgestell (11) schwenkbar ist, wobei die Halterung einen gegenüber dem Grundgestell (11) verschwenkbaren Rahmen (20) und einen daran anordbaren oder angeordneten Adapter (25), der mit einem Ende des zu transportierenden länglichen Objekts verbindbar ist, aufweist.

Erfindungsgemäß ist vorgesehen, dass durch eine Änderung der Winkellage der den Rahmen (20) aufnehmenden Längsträger (11a, 11b) des Grundgestells (11) relativ zur Transportfläche (8) des Transportfahrzeugs (1) und/oder durch eine außermittige Anordnung des Adapters (25) am Rahmen (20) die Anordnung des Adapters (25) relativ zur Transportfläche (8) höhenveränderbar ist.

## Beschreibung

Die Erfindung betrifft eine Vorrichtung zum Halten eines Endes eines länglichen Objekts, insbesondere einer selbsttragenden Last, die ein Grundgestell aufweist, an dem eine Halterung, an welcher das längliche Objekt festlegbar ist, schwenkbar angeordnet ist, und die mindestens eine Betätigungseinrichtung aufweist, durch welche die Halterung relativ zum Grundgestell schwenkbar ist, sowie ein Fahrzeug zum Transport eines derartigen länglichen Objekts mit der vorgenannten Haltevorrichtung.

Eine Vorrichtung zum Halten eines Endes eines länglichen Objekts, also eine Haltevorrichtung für ein derartiges Objekt, sowie ein diese Vorrichtung verwendendes Transportfahrzeug ist z. B. aus der DE 10 2019 002 331 A1 der Anmelderin bekannt. In dieser Druckschrift ist eine Vorrichtung der eingangs genannten Art beschrieben, bei der vorgesehen ist, dass die Halterung durch mindestens ein Gelenk schwenkbar am Grundgestell der Vorrichtung angeordnet und diese einen das längliche Objekt haltenden Adapter aufweist, welcher an der Halterung mittels einer Schwenkeinrichtung schwenkbar angeordnet ist.

Aus der DE 10 2010 042 783 A1 ist ein Transportfahrzeug zum Transport von Windenergieanlagen-Rotorblättern und/oder Turmsegmenten bekannt, welches ein Transportgestell mit einem Grundrahmen, einen mit dem Grundrahmen unter einem ersten Winkel fest verbundenen Aufnahmerahmen und eine Dreh-Verstelleinheit aufweist, welche mit einem ersten Ende an dem Aufnahmerahmen befestigt ist und an ihrem zweiten Ende einen Blattadapter zur Aufnahme eines Rotorblatts oder eines Turmsegments aufweist. Die Dreh-Verstelleinheit weist mindestens ein erstes Drehlager auf, wobei ein zweiter Winkel zwischen der durch den Grundrahmen aufgespannten Grundebene und der ersten Drehebene des Drehlagers vorgesehen ist, der ungleich 90° +/- 10° ist. Der Grundrahmen weist zwei im wesentlichen parallele Hauptträger auf, welche zur Aufnahme von Gewichten dienen können. An einer Seite des Grundrahmens sind mehrere Hydraulikzylinder vorgesehen, mit denen ein Kippen des gesamten Transportgestells ermöglicht werden kann, um das Lochbild von Löchern in einem Wurzelbereich des zu transportierenden Rotorblatts mit den Löchern in einem Blattadapter in Einklang zu bringen, der am zweiten Teil des Grundrahmens befestigt ist. Die Vorrichtung weist einen Kippstuhl auf, welcher schwenkbar an dem Grundrahmen des Transportgestells befestigt ist. Dieser Kippstuhl weist einen Adapter mit einer Vielzahl von kreisförmig angeordneten Löchern auf, die Lochkreise ausbilden. Auf diese Art und Weise können unterschiedliche Rotorblätter mit unterschiedlichen Durchmessern an dem Adapter befestigt werden.

Aus der DE 10 2009 040 200 B4 der Anmelderin ist eine Transportvorrichtung für ein längliches Objekt bekannt, wobei die Transportvorrichtung eine Plattform, auf der das längliche Objekt transportierbar ist, und eine Schwenkeinrichtung, mit der das auf der Plattform aufgenommene längliche Objekt aus einer ersten Lage in zumindest eine zweite Lage bewegbar ist, aufweist. Die Schwenkeinrichtung weist eine Halterung mit einer Befestigungsplatte auf, an der der Endbereich des länglichen Objekts anschraubbar ist. Die Halterung kann wechselbare Befestigungsplatten mit unterschiedlich konfigurierten Lochbildern aufnehmen, so dass zum Transport von unterschiedlichen länglichen Objekten nur ein Austausch der Befestigungsplatte notwendig ist.

Die DE 10 2012 020 233 B4 beschreibt eine Kupplungsanordnung sowie ein Schwerlast-Transportfahrzeug mit einer derartigen Kupplungsanordnung, an der ein mit Schraubbolzen, Schraubenbohrungen und/oder Durchgangsbohrungen versehenes Ende eines länglichen Objekts mit einer auf dem Transportfahrzeug angeordneten Kupplungseinrichtung verbindbar ist. Das zu transportierende längliche Objekt wird hierbei an einem Adapter der Haltevorrichtung befestigt, der um eine waagerecht verlaufende Achse zu dem diesen Adapter aufnehmenden Grundgestell verschwenkbar ist. Der Adapter ist dabei derart auf den Durchmesser des in der Regel in seinem Querschnitt kreis- oder ellipsenförmig ausgebildeten Objekts abgestimmt, so dass das Ende des länglichen Objekts mittels Schraub- oder Bolzverbindungen mit dem Adapter verbunden werden kann, um einen sicheren Transport des länglichen Objekts zu gewährleisten.

Der Enddurchmesser eines derartigen länglichen Objekts bestimmt daher die Dimensionen des Adapters, z. B. der in der DE 10 2009 040 200 B4 beschriebenen Befestigungsplatte, und das diesen Adapter aufnehmende Grundgestell ist auf dessen Abmessungen derart angepasst, dass der Adapter relativ zum Grundgestell verschwenkbar ist. Die bekannte Haltevorrichtung ist also für einen Transport eines länglichen Objekts mit einem bestimmten (maximalen) Enddurchmesser ausgelegt.

Derartige Haltevorrichtungen und diese verwendende Transportfahrzeuge werden insbesondere zum Transport von Komponenten einer Windkraftanlage, z. B. für Rotorblätter, Turmsegmente oder dergleichen eingesetzt. Derartige Komponenten werden zunehmend größer, so dass auch der Wurzel- bzw. Enddurchmesser einer derartigen Komponente zunimmt. Dies führt aber dazu, dass bei einer vorhandenen, auf einen bestimmten maximalen Enddurchmesser abgestimmten Haltevorrichtung längliche Objekte mit einem übergroßen Endquerschnitt nicht mehr transportiert werden können, da das Grundgestell der bekannten Haltevorrichtung einen für diese Objekte mit einem übergroßen Enddurchmesser erforderlichen Adapter, welcher - wie beschrieben - auf den Enddurchmesser des zu transportierenden Objekts abgestimmt sein muss, nicht mehr aufnehmen kann.

Die DE 10 2015 109 464 A1 beschreibt eine Transportvorrichtung zum Transportieren eines länglichen Bauteils sowie ein Verfahren dazu. Die Transportvorrichtung weist eine Bauteilaufnahme zur Aufnahme des zu transportierenden Bauteils und eine Anhebevorrichtung auf, wobei die Bauteilaufnahme mit der Anhebevorrichtung über ein Festlager um wenigstens eine erste Drehachse verdrehbar gekoppelt ist und die Anhebevorrichtung das Festlager wenigstens in einer vertikalen Richtung bewegen kann. Die Bauteilaufnahme ist derart ausgebildet, dass ein gemeinsamer Schwerpunkt der Bauteilaufnahme und des zu transportierenden Bauteils entlang einer Haupterstreckungsrichtung des Bauteils zwischen dem ersten Ende des Bauteils und dem Festlager liegt. Durch diese Lage des gemeinsamen Schwerpunkts der Bauteilaufnahme und des zu transportierenden Bauteils zwischen dem ersten Ende, welches dem Schwerpunkt des Bauteils näher ist als das zweite Ende, und dem Festlager, über welches die Bauteilaufnahme mit der Anhebevorrichtung, bezogen auf die erste Drehachse verdrehbar gekoppelt ist, kann eine Reduzierung der auf die Transportvorrichtung und ihre Komponenten einwirkenden Kräfte und Momente erzielt werden.

Die DE 20 2018 106 492 U1 beschreibt ein Fahrzeug zum Transportieren eines langen Transportguts, wie beispielsweise eines Flügels einer Windkraftanlage. Das Fahrzeug weist einen vorderen Fahrwerkabschnitt und einen dazu in Fahrzeuglängsrichtung beabstandeten hinteren Fahrwerkabschnitt auf, wobei der vordere Fahrwerkabschnitt mit einem verschwenkbaren Adapter zur Aufnahme des Transportguts versehen ist und mit dem hinteren Fahrwerkabschnitt mittels eines teleskopierbaren Längsträgers verbunden ist. Der verschwenkbare Adapter ist in einem oberen Bereich an einem Vertikalträger des vorderen Fahrwerkabschnitts drehbar gelagert, dessen Basis zwischen einem vorderen Teil und einem hinteren Teil des vorderen Fahrwerkabschnitts gehalten ist. Zur Verschwenkung des Adapters ist ein hydraulischer Schwenkantrieb vorgesehen, der an einem unteren Bereich des verschwenkbaren Adapters angreift. Bei einer Betätigung dieses Schwenkantriebs hebt der verschwenkbare Adapter den darin aufgenommenen Windflügel ab, wodurch der hintere Fahrwerkabschnitt entlastet wird. Auch hier muss wieder der Adapter auf den Enddurchmesser des zu transportierenden Objekts abgestimmt sein, damit das zu transportierende Transportgut im Adapter aufnehmbar ist.

Es ist daher Aufgabe der vorliegenden Erfindung, eine Vorrichtung zum Halten eines Endes eines länglichen Objekts der eingangs genannten Art derart weiterzubilden, dass in einfacher Art und Weise auch längliche Objekte mit einem übergroßen Endquerschnitt gehalten und transportiert werden können. Auch soll ein für die erfindungsgemäße Haltevorrichtung besonders geeignetes Transportfahrzeug geschaffen werden.

Diese Aufgabe wird durch eine erfindungsgemäße Vorrichtung mit den Merkmalen des Anspruchs 1 gelöst.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der Figuren beschrieben werden. Es zeigen:
- Figur 1: eine perspektivische Darstellung eines bekannten Transportfahrzeugs mit einer Vorrichtung zum Halten eines Endes eines länglichen Objekts,
- Figur 2: eine Seitenansicht eines ersten Ausführungsbeispiels,
- Figur 3: eine Seitenansicht eines Transportfahrzeugs mit einem ersten Ausführungsbeispiel einer Haltevorrichtung,
- Figur 4: eine Seitenansicht des ersten Ausführungsbeispiel der Haltevorrichtung der Figur 3,
- Figur 5: eine Seitenansicht eines Transportfahrzeugs mit einem zweiten Ausführungsbeispiel einer Halteeinrichtung,
- Figur 6: eine perspektivische Darstellung eines zweiten Ausführungsbeispiels der Haltevorrichtung,
- Figur 7: eine Seitenansicht des zweiten Ausführungsbeispiels der Figur 6,
- Figur 8: eine perspektivische Darstellung eines dritten Ausführungsbeispiels der Haltevorrichtung,
- Figur 9: eine Seitenansicht des dritten Ausführungsbeispiels der Figur 8,
- Figur 10: eine schematische Darstellung eines vierten Ausführungsbeispiels,
- Figur 11: eine schematische Darstellung eines fünften Ausführungsbeispiels, und
- Figur 12: eine perspektivische Darstellung eines weiteren Transportfahrzeugs mit einer Vorrichtung zum Halten eines Endes eines länglichen Objekts.

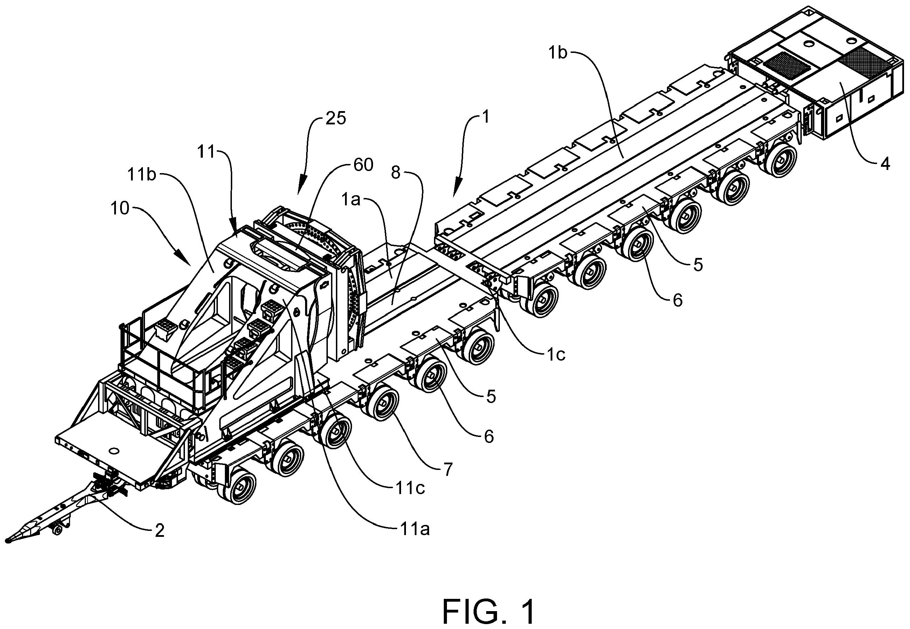

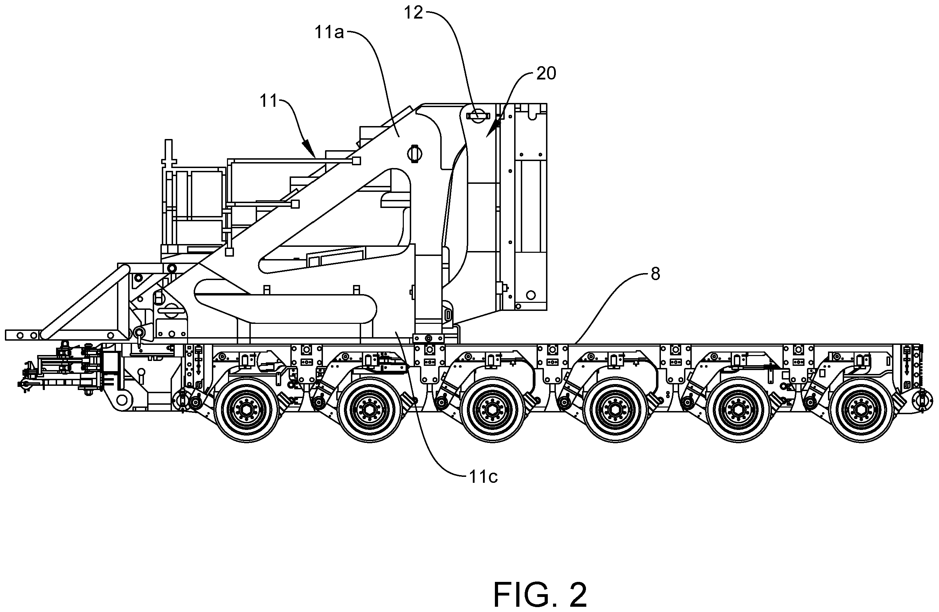

Bevor im Folgenden im Detail die unterschiedlichen Ausführungsbeispiele der Vorrichtung zum Halten eines Endes eines länglichen Objekts - im Folgenden kurz: Haltevorrichtung 10 - beschrieben werden, soll zum besseren Verständnis anhand der Figuren 1 und 2 zuerst der grundsätzliche Aufbau eines allgemein mit 1 bezeichneten Transportfahrzeugs und einer zum Halten des zu transportierenden länglichen Objekts (in den Figuren nicht dargestellt) dienenden Haltevorrichtung 10 beschrieben werden, wie sie aus dem Stand der Technik bekannt sind. Im hier gezeigten Fall weist das Transportfahrzeug 1 zwei Fahrzeugmodule 1a und 1b auf, die mittels einer nicht näher dargestellten Kupplung 1c aneinander gekoppelt sind. Dem Fachmann ist aber aus der nachfolgenden Beschreibung ersichtlich, dass es nicht zwingend ist, dass das Transportfahrzeug 1 derart modular aufgebaut ist. Die Figur 1 zeigt des Weiteren noch eine Kupplungsvorrichtung 2, mit der das Transportfahrzeug 1 an ein Zug- oder Schubfahrzeug ankoppelbar ist, sowie eine Antriebseinrichtung 4. Das Transportfahrzeug 1 weist ein Fahrgestell 5 auf, unter dem eine Anzahl von Achsen 6 mit Radanordnungen 7 angeordnet sind. Die Haltevorrichtung 10 ist auf einer Transportfläche 8 angeordnet. Ein derartiger Aufbau ist bekannt und muss daher nicht mehr näher beschrieben werden.

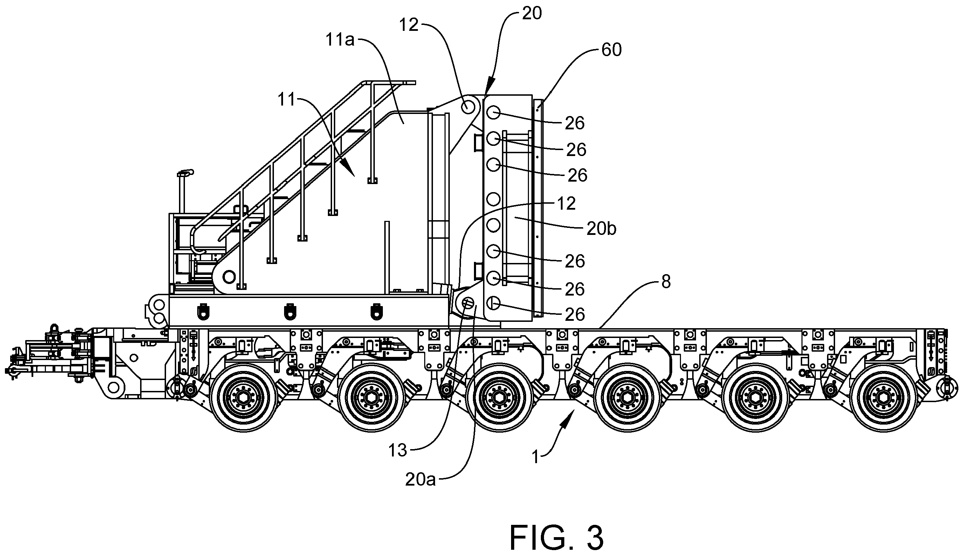

Die Haltevorrichtung 10 weist ein Grundgestell 11 mit zwei parallel verlaufenden Längsträgern 11a und 11b auf, die auf einem Basiselement 11c angeordnet sind. Die Haltevorrichtung 10 besitzt - wie am besten aus Figur 2 ersichtlich ist - einen Transportrahmen 20, welcher über eine oben liegende Schwenkverbindung 12 mit den Längsträgern 11a und 11b schwenkbar verbunden ist. Der Transportrahmen 20 trägt einen Adapter 25, welcher vorzugsweise auswechselbar mit dem Transportrahmen 20 verbunden ist. An diesem Adapter 25 wird das Ende des zu transportierenden länglichen Objekts in an und für sich bekannter und daher nicht mehr näher beschriebenen Art und Weise, z. B. durch Schraub- oder Bolzenverbindungen, befestigt. Die genaue Ausgestaltung eines derartigen Adapters 25 ist für das Verständnis der nachfolgenden Beschreibung nicht erforderlich, der Adapter 25 wird daher in den nachfolgenden Figuren nicht mehr dargestellt. Dies trifft auch für die Art und Weise der Befestigung des Adapters 25 am Transportrahmen 20 zu. Bevorzugt wird, dass die Verbindung zwischen Adapter 25 und Transportrahmen 20 durch einen Drehkranz 60 erfolgt, wie er in Figur 3 dargestellt ist. Es ist aber nicht zwingend, zur Verbindung von Adapter 25 und Transportrahmen 20 einen derartigen Drehkranz 60 zu verwenden. Die Verwendung eines derartigen Drehkranzes 60 besitzt aber den Vorteil, dass hierdurch das zu transportierende längliche Objekt um seine Längsachse rotiert werden kann.

Der Adapter 25 ist dabei auf den Enddurchmesser des zu transportierenden länglichen Objekts abgestimmt. Um einen möglichst niedrigen Schwerpunkt zu erreichen, wird angestrebt, die Höhe der obenliegenden Schwenkverbindung 12 möglichst gering zu halten, also den Abstand dieser Schwenkverbindung 12 zur Transportfläche 8 möglichst gering zu halten. Demzufolge ist es üblich, den Abstand zwischen Schwenkverbindung 12 und Transportfläche 8 nur geringfügig größer als der die Höhe des Transportrahmens 20 und/oder des Adapters 25 vorzusehen.

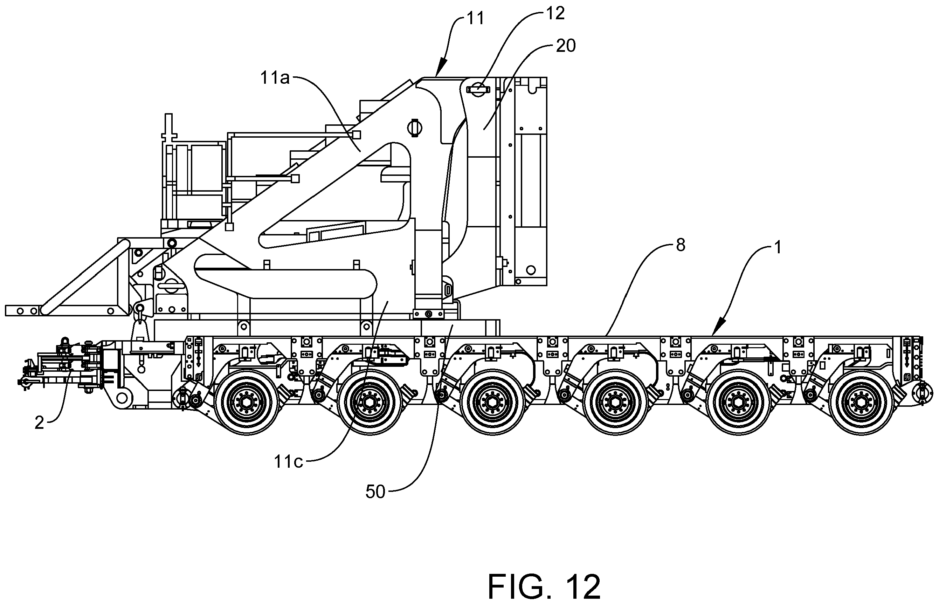

Zu transportierende Objekte mit einem größeren Enddurchmesser benötigen aber einen größeren Adapter, damit ihr Ende an einer Befestigungsplatte des Adapters 25 mittels einer Schraub- oder Bolzenverbindung arretiert werden können. Man erkennt aus den Figuren 1 und 2, dass bei dem bekannten Transportfahrzeug 1 Adapter 25, die für längliche Objekte mit einem übergroßem Enddurchmesser dimensioniert sind, nicht mehr aufgenommen werden können, da die maximale Erstreckung eines von der bekannten Haltevorrichtung 10 aufnehmbaren Adapters durch den Abstand unteren Endes des Adapters 25 zu der Transportfläche 8 des Transportfahrzeugs begrenzt wird. Dies hat aber zur Folge, dass längliche Objekte, die einen größeren Durchmesser haben als der konstruktionsmäßig vorgesehene maximale Durchmesser, also einen übergroßen Durchmesser besitzen, mit den bekannten Haltevorrichtungen 1 nicht mehr transportiert werden können. Die Figur 1 zeigt des Weiteren, dass die Haltevorrichtung 10 auf einer Zwischenplatte 50 angeordnet ist, welche weiter unten anhand der Figur 12 beschrieben wird. Es ist klarzustellen, dass eine derartige Zwischenplatte 50 nicht aus dem Stand der Technik bekannt ist.

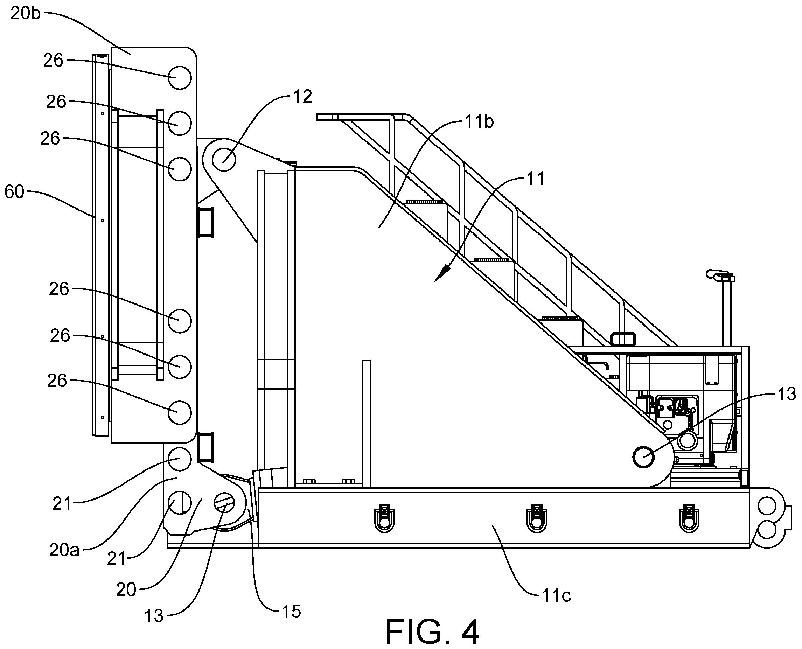

In den Figuren 3 und 4 ist nun ein Transportfahrzeug 1 zusammen mit einem ersten Ausführungsbeispiel einer Haltevorrichtung 10 dargestellt, welche es in vorteilhafter Art und Weise erlaubt, auch längliche Objekte mit einem übergroßen Enddurchmesser sicher zu halten und damit transportieren zu können. Der Grundaufbau des in Figur 3 dargestellten Transportfahrzeugs 1 und des in Figur 4 gezeigten ersten Ausführungsbeispiels der Haltevorrichtung 10 entspricht dem des Transportfahrzeugs 1 und der Haltevorrichtung 10 der Figuren 1 und 2, so dass einander entsprechende Bauteile mit den gleichen Bezugszeichen versehen werden und nicht mehr im Detail hinsichtlich ihres Aufbaus und ihrer Funktion erläutert werden.

Man erkennt in den Figuren 3 und 4 wiederum das Grundgestell 11 der Haltevorrichtung 10 mit den beiden Längsträgern 11a und 11b sowie dem Basiselement 11c und den über die obenliegende Schwenkverbindung 12 an den Längsträgern 11a, 11b schwenkbar angelenkten Transportrahmen 20. Des Weiteren ist aus den Figuren ein Hydraulikzylinder 15 ersichtlich, der mit seinem einen Ende am Grundgestell 11 angelenkt und mit seinem zweiten Ende durch ein Gelenk 13 mit einem unteren Bereich des Transportrahmens 20 verbunden ist. Vorzugsweise ist vorgesehen, dass die Haltevorrichtung 10 zwei derartige Hydraulikzylinder 15 aufweist, wobei jeder der beiden Hydraulikzylinder 15 über ein Gelenk 13 an gegenüberliegenden Seiten mit dem Transportrahmen 20 verbunden ist. Der oder die Hydraulikzylinder 15 dienen dazu, den Transportrahmen 20 und somit den an ihm befestigten Adapter 25 und folglich das vom Adapter 25 gehaltene längliche Objekt um die Schwenkverbindung 12 zu verschwenken, damit das längliche Objekt erforderlichenfalls beim Transport angehoben oder abgesenkt werden kann. Diese Maßnahme ist bekannt und muss daher nicht mehr näher beschrieben werden.

Der Transportrahmen 20 weist einen Grundrahmen 20a und einen an diesem verschiebbar angeordneten Verschieberahmen 20b auf, wie dies am besten aus Figur 4 ersichtlich ist. Der Transportrahmen 20 weist Arretiermittel auf, mittels derer der Verschieberahmen 20b in einer definierten Höhenposition, d. h. in einem definierten Abstand zur Transportfläche 8 des Transportfahrzeugs 1, am Grundrahmen 20a festlegbar ist. Wie ein Vergleich der Figuren 3 und 4 zeigt, ist durch eine unterschiedliche Anordnung des Verschieberahmens 20b am Grundrahmen 20a der Abstand des Verschieberahmens 20b zur Transportfläche 8 veränderbar. Wird nun an dem Verschieberahmen 20b in an und für sich bekannter Art und Weise, z. B. über den Drehkranz 60, der Adapter 25 angebracht, so ist sein unterer Rand, in Abhängigkeit von der Anordnung des Verschieberahmens 20b am Grundrahmen 20a in einer nach oben versetzten Position (Figur 4) des Verschieberahmens 20b weiter von der Transportfläche 8 des Transportfahrzeugs 1 entfernt als in ihrer in Figur 3 dargestellten tiefer liegenden Anordnung, bei der der Verschieberahmen 20b mittig am Grundrahmen 20a festgelegt ist. In der in Figur 4 gezeigten erhöhten Anordnung des Verschieberahmens 20b und somit des Adapters 25 am Grundrahmen 20a des Transportrahmens 20 können somit - ohne den grundlegenden Aufbau der Haltevorrichtung 10 zu verändern - längliche Objekte mit einem größeren Durchmesser transportiert werden. Der Adapter 25 kann somit in einer zur Transportfläche 8 orthogonalen Richtung außermittig am Grundrahmen 20a festgelegt werden, wodurch ein Freiraum zwischen dem Transportrahmen 20 und der Transportfläche 8 geschaffen wird. Diese Maßnahme erlaubt es in vorteilhafter Art und Weise, am Transportrahmen 20 auch Adapter 25 anzubringen, deren Dimensionen den Transport eines länglichen Objekts mit einem übergroßen Enddurchmesser erlauben. Ein "Höheranordnen" des Adapters 25 am Rahmens 20 bewirkt nämlich, dass der untere Rand des Adapters 25 weiter von der Transportfläche 8 des Transportfahrzeugs 1 entfernt ist. Es wird somit ein zusätzlicher Freiraum zwischen der Transportfläche 8 des Transportfahrzeugs 1 und dem Adapter 25 geschaffen. Dies hat in vorteilhafter Art und Weise zur Folge, dass am Adapter 25 auch längliche Objekte mit einem übergroßen Enddurchmesser aufgenommen und vom Transportfahrzeug 1 transportiert werden können.

Um den Verschieberahmen 20b am Grundrahmen 20a des Transportrahmens 20 in unterschiedlichen Positionen befestigen zu können, ist beim beschriebenen Ausführungsbeispiel vorgesehen, dass Längsträger des Verschieberahmens 20b und/oder die Längsträger des Grundrahmens 20a in - nicht notwendigerweise gleichen - Abständen voneinander angeordnete Öffnungen 26 bzw. 21 aufweisen, durch welche Arretierbolzen (nicht gezeigt) geführt werden können, so dass hierdurch der Verschieberahmen 20b in einer festgelegten Höhenposition am Transportrahmen 20 lagefixiert ist. Es ist natürlich offensichtlich, dass die Art und Weise, wie der Verschieberahmen 20b in unterschiedlichen Positionen am Transportrahmen 20 festgelegt wird, nicht entscheidend ist, es ist daher durchaus möglich, die vorgenannte Arretierung des Verschieberahmens 20b am Grundrahmen 20a mittels zusammenwirkender Arretierbolzen und Öffnungen 21, 26 durch eine andere Art der Lagefixierung zu ersetzen. Außerdem ist es nicht zwingend, dass der Verschieberahmen 20b nur in diskreten Abständen am Grundrahmen 20a festlegbar ist. Es kann natürlich auch vorgesehen sein, dass der Verschieberahmen 20b am Grundrahmen 20a in variablen Positionen festlegbar ist.

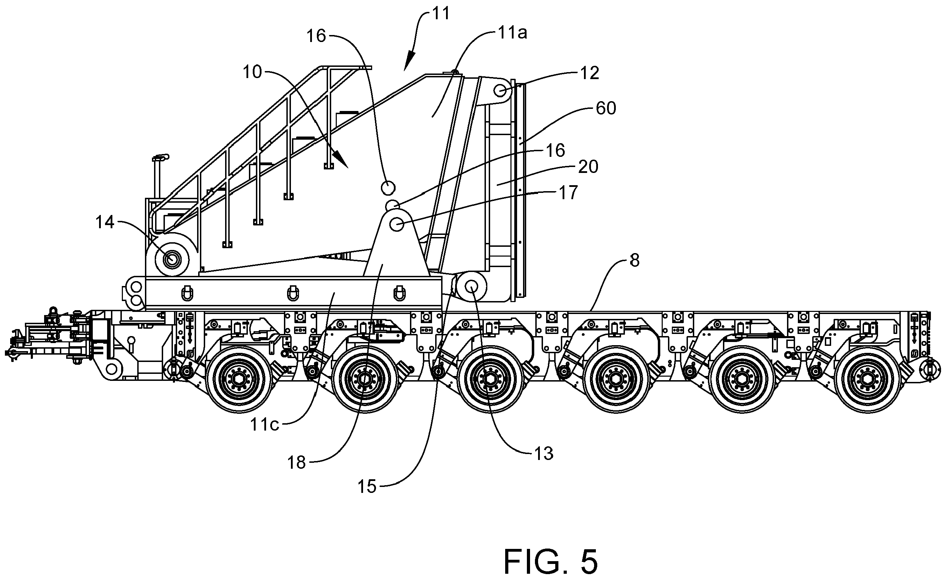

Die Figuren 5 bis 7 zeigen nun ein zweites Ausführungsbeispiel einer Haltevorrichtung 10, wobei in Figur 5 wiederum das die Haltevorrichtung 10 tragende Transportfahrzeug 1 dargestellt ist. Der grundsätzliche Aufbau des Transportfahrzeugs 1 und der Haltevorrichtung 10 entsprechen wiederum denjenigen der Figuren 1 und 2, so dass einander entsprechende Bauteile wiederum mit den gleichen Bezugszeichen versehen und auch hinsichtlich ihrer Ausbildung und Funktion nicht mehr näher erläutert werden. Man erkennt wiederum das Grundgestell 11 mit den beiden Längsträgern 11a und 11b sowie den Transportrahmen 20. Der wesentliche Unterschied zwischen dem ersten und dem zweiten Ausführungsbeispiel ist nun, dass bei dem in den Figuren 5 bis 7 gezeigten zweiten Ausführungsbeispiel nicht der Verschieberahmen 20b und somit der Adapter 25 in vertikaler Richtung außermittig am Transportrahmen 20 anordbar ist, sondern dass zur Schaffung eines zusätzlichen Freiraums über der Transportfläche 8 die beiden Längsträger 11a, 11b des Grundgestells 11 höhenverstellbar ausgebildet sind, so dass durch eine Höhenänderung der beiden Längsträger 11a, 11b die den Transportrahmen 20 mit den Längsträgern 11a, 11b verbindende Schwenkverbindung 12 und somit der Transportrahmen 20 und folglich der an ihm angeordnete Adapter 25 angehoben oder abgesenkt werden können. Hierzu ist vorgesehen, dass die beiden Längsträger 11a, 11b des Grundgestells 11 um eine die Längsträger 11a, 11b mit dem Basiselement 11c gelenkig verbindenden Schwenkachse 14 verschwenkbar sind. Werden nun die beiden Längsträger 11a, 11b des Grundgestells 11 entlang der Schwenkachse 14 verschwenkt, so wird hierbei der Transportrahmen 20 und folglich der an ihm befestigte Adapter 25 angehoben, so dass wiederum der untere Rand des Adapters 25 weiter von der Transportfläche 8 des Transportfahrzeugs 1 entfernt ist und somit ein größerer Freiraum zwischen dem das längliche Objekt tragenden Adapter 25 und der Transportfläche 8 des Transportfahrzeugs 1 gegeben ist. Dies erlaubt es wiederum in einfacher Art und Weise, auch längliche Objekte mit einem übergroßen Enddurchmesser mit dem Transportfahrzeug 1 zu transportieren.

Um nun die beiden Längsträger 11a, 11b des Grundgestells 11 in einer gewissen Schwenklage und somit den Transportrahmen 20 und folglich den Adapter 25 in einer gewissen Höhenposition festzulegen, ist beim zweiten Ausführungsbeispiel der Haltevorrichtung 10 vorgesehen, dass die Längsträger 11a, 11b eine Anzahl von voneinander beabstandeten und entlang des Schwenkkreises um die Schwenkachse 14 angeordnete Öffnungen 16 aufweisen. In einer gewissen Schwenkposition wirkt jeweils eine Öffnung 16 eines jeden der Längsträger 11a, 11b mit einer Öffnung 17, die in einem auf dem Basiselement 11c vorgesehenen Abstandshalter 18 angeordnet ist, zusammen, derart, dass durch zusammenwirkende Öffnungen 16, 17 jeweils ein Bolzen hindurchgeschoben und derart die beiden Längsträger 11a, 11b in einer gewissen Schwenklage arretiert werden können. Natürlich ist es auch hier - genauso wie beim ersten Ausführungsbeispiel - möglich, dass die vorgenannte Art der Verriegelung der Längsträger 11a, 11b in einer gewissen Schwenklage durch mit korrespondierenden Öffnungen 16, 17 zusammenwirkende Bolzen durch eine andere Art und Weise der Lagearretierung ersetzt wird. Auch hier ist es selbstverständlich möglich, anstelle von in diskreten Abständen angeordneten Öffnungen 16 und 17 eine variable Art und Weise der Verschwenkung der Längsträger 11a, 11b um die Schwenkachse 14 vorzusehen.

Die Figuren zeigen die beiden Längsträger 11a, 11b in ihrer höchsten beim zweiten Ausführungsbeispiel vorgesehenen Position. Werden die beiden Längsträger 11a, 11b mittels nicht gezeigter Schwenkeinheiten um die Schwenkachse 14 abgesenkt, so können die Längsträger 11a, 11b und somit der Transportrahmen 20 in einer mittleren Position oder in einer unteren Position (oberste Öffnung 16) lagefixiert werden.

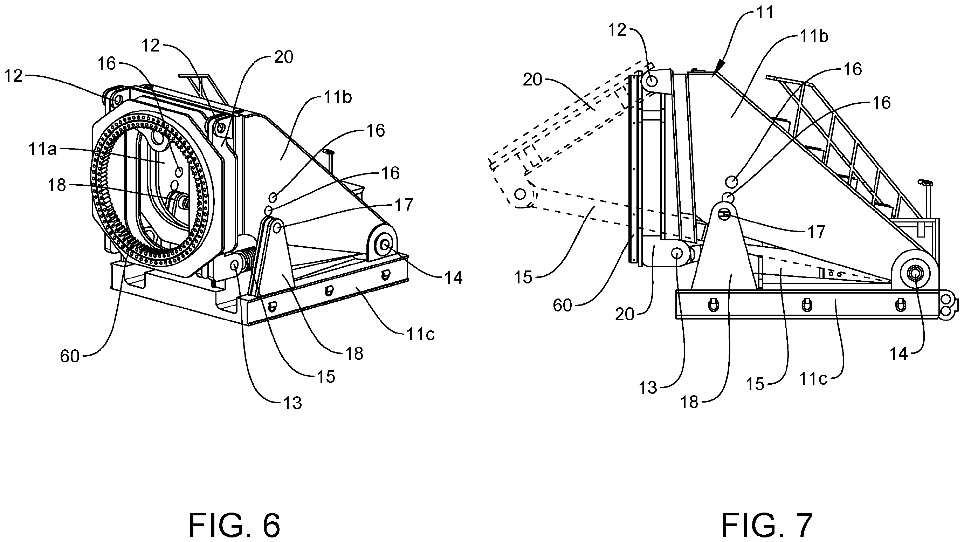

Die Figuren 6 und 7 zeigen noch Hydraulikzylinder 15, mit denen der Transportrahmen 20 um die Schwenkverbindung 12 verschwenkbar ist, wie dies in der Abbildung der Figur 7 dargestellt ist. Diese Maßnahme, welche dazu dient, dass das längliche Objekt mit seinem anderen Ende angehoben und abgesenkt werden kann, ist aber nicht zwingend vorzusehen.

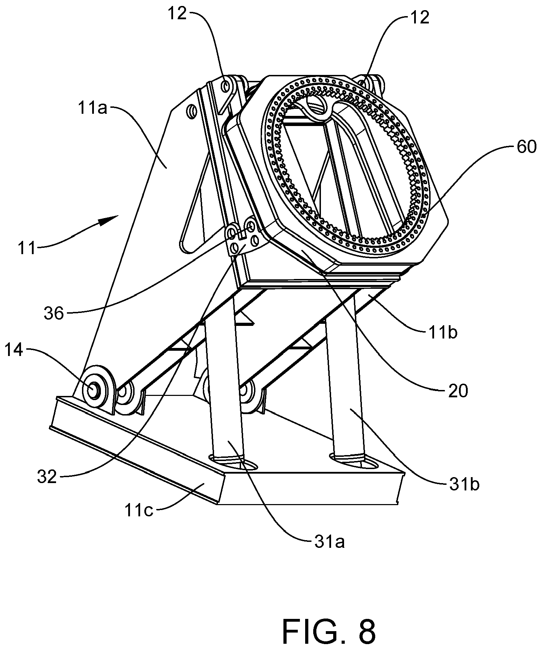

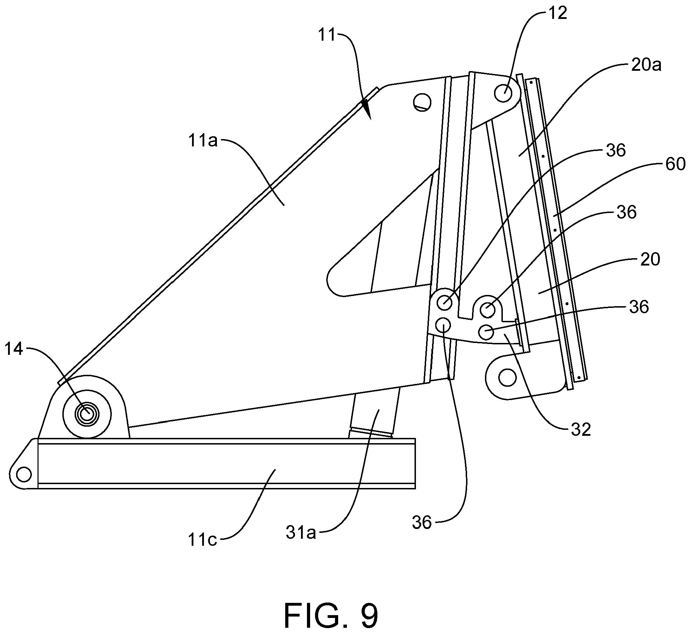

In den Figuren 8 und 9 ist ein drittes Ausführungsbeispiel der Haltevorrichtung 10 dargestellt, wobei einander entsprechende Bauteile mit den gleichen Bezugszeichen versehen und nicht mehr näher hinsichtlich ihrer Funktion und ihrer Ausgestaltung erläutert werden. Die Haltevorrichtung 10 des dritten Ausführungsbeispiels weist wiederum das Grundgestell 11 mit den beiden Längsträgern 11a und 11b auf, die um die auf dem Basiselement 11c angeordneten Schwenkachse 14 verschwenkbar sind. Außerdem ist der Transportrahmen 20 samt dem Drehkranz 60 dargestellt. Der Transportrahmen 20 und somit der an ihm angeordnete Adapter 25 sind über die obenliegende Schwenkverbindung 12 gegenüber dem Grundgestell 11 verschwenkbar. Der wesentliche Unterschied zum zweiten Ausführungsbeispiel, bei dem ebenfalls eine Verschwenkbarkeit der Längsträger 11a und 11b zum Basiselement 11c des Grundgestells 11 vorgesehen ist, ist nun, dass - wie am besten aus Figur 8 ersichtlich ist - zwei teleskopierbare Hebeelemente 31a und 31b, z. B. zwei Hydraulikzylinder, auf, welche jeweils mit ihrem einen Ende auf dem Basiselement 11c aufsetzen und mit ihrem anderen Ende gelenkig mit einem oberen Bereich der Längsträger 11a, 11b verbunden sind. Werden nun diese beiden Hebeelemente 31a, 31b ausgefahren, so schwenken die Längsträger 11a, 11b um die Schwenkachse 14, wodurch der Transportrahmen 20 und somit der darin befestigte Adapter 25 angehoben wird. Hierdurch steht wiederum ein größerer Freiraum zwischen dem unteren Rand des Adapters 25 und der Transportfläche 8 des Transportfahrzeugs 1 zur Verfügung, welcher es in vorteilhafter Art und Weise erlaubt, einen Adapter 25 zu verwenden, in den auch längliche Objekte mit einem übergroßen Enddurchmesser aufgenommen werden können.

Um den Transportrahmen 20 wiederum in einer bestimmten Schwenkposition anordnen zu können, die es erlaubt, dass der am Transportrahmen 20 angeordnete Adapter 25 senkrecht und somit das zu transportierende längliche Objekt im Wesentlichen parallel zur Transportfläche 8 ausgerichtet ist, ist vorgesehen, dass von dem über die obenliegende Schwenkverbindung 12 gegenüber dem Grundgestell 11 verschwenkbaren Transportrahmen 20 Öffnungen 36 aufweisende Arme 32 vorstehen, und dass in den beiden Längsträgern 11a und 11b korrespondierende Öffnungen vorgesehen sind, durch welche Arretierbolzen hindurchführbar sind. Es ist natürlich auch möglich, dass ein oder beide Arme 32 an dem oder den Längsträgern 11a, 11b angeordnet und der Transportrahmen 20 eine oder mehrere den Öffnungen 36 entsprechende Öffnung besitzt.

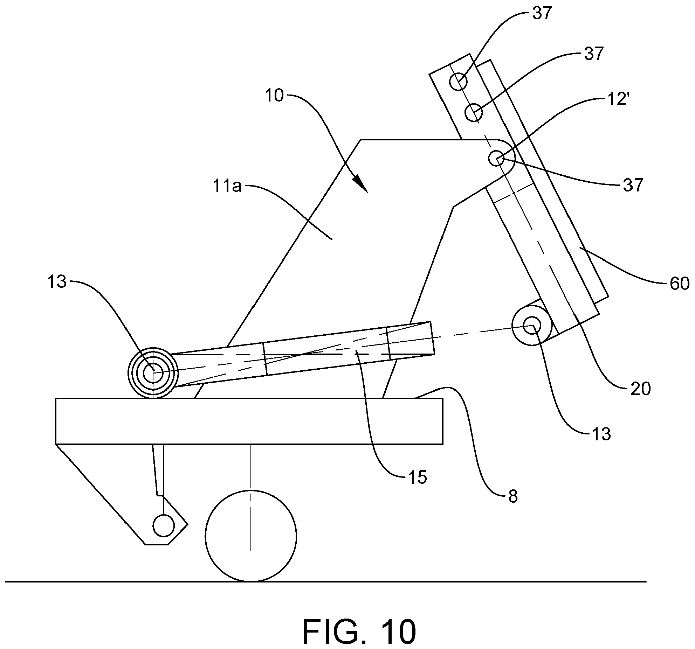

In Figur 10 ist schematisch eine Seitenansicht eines vierten Ausführungsbeispiels der Haltevorrichtung 10 dargestellt, wobei wiederum einander entsprechende Bauteile mit den gleichen Bezugszeichen versehen und nicht mehr näher im Detail beschrieben werden. Um den Abstand zur Transportfläche 8 des Transportfahrzeugs 1 vergrößern und damit für den Transport eines länglichen Objekts mit einem übergroßen Enddurchmesser erforderliche Adapter 25 vorsehen zu können, ist vorgesehen, dass in den Längsträgern des Transportrahmens 20 Durchtrittsöffnungen 37 für die Schwenkachse 12' der Schwenkverbindung 12 vorgesehen sind. Durch eine entsprechende Auswahl der Durchtrittsöffnungen 37 kann die Höhenposition des Transportrahmens 20 und somit des Adapters 25 zur Transportfläche 8 des Transportfahrzeugs 1 verändert werden.

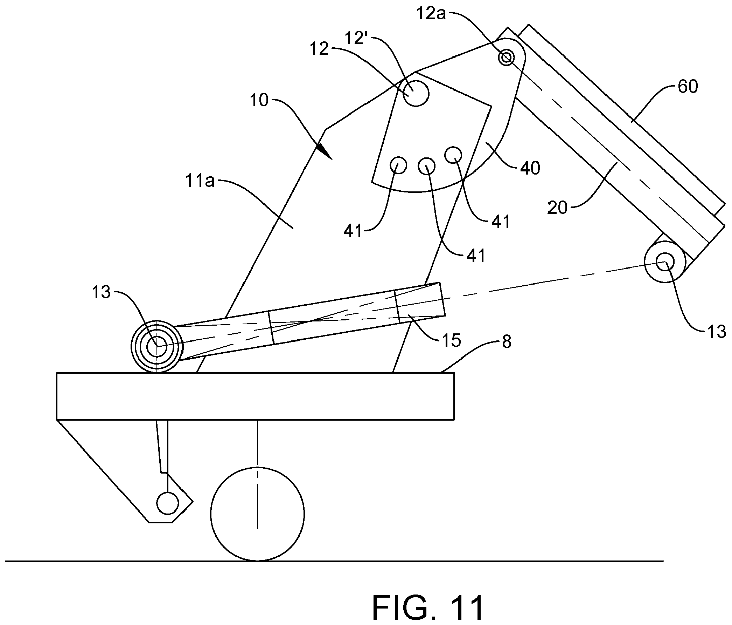

In Figur 11 ist ein fünftes Ausführungsbeispiel einer Haltevorrichtung 10 dargestellt, welches seinem Grundaufbau nach demjenigen des vierten Ausführungsbeispiels entspricht, so dass einander entsprechende Bauteile mit den gleichen Bezugszeichen versehen und nicht mehr näher hinsichtlich ihrer Funktion und ihrer Ausgestaltung erneut beschrieben werden. Der wesentliche Unterschied zwischen dem vierten und dem fünften Ausführungsbeispiel ist, dass der Transportrahmen 20 nicht - wie beim vierten Ausführungsbeispiel - direkt um eine Achse 12' verschwenkbar ist, sondern dass ein Exzenter 40 vorgesehen ist, der um die Schwenkachse 12' verschwenkbar ist und an einem Ende eine Schwenkachse 12a trägt, um die der Transportrahmen 20 verschwenkbar ist. Es sind hierbei wieder Arretiermittel 41 vorgesehen, mittels derer der Exzenter 40 in unterschiedlichen Schwenkpositionen befestigbar ist.

Die Figur 12 zeigt nun eine zweite Ausführungsform des Transportfahrzeugs 1 zusammen mit der Haltevorrichtung 10. Um nun den Abstand des Adapters 25 zur Transportfläche 8 vergrößern zu können, ist vorgesehen, dass bei dem in den vorgenannten Figuren gezeigten Transportfahrzeug 1 eine Zwischenplatte 50 zwischen der Transportfläche 8 und dem Grundgestell 11 der Haltevorrichtung 10 eingeschoben ist. Diese Vorgangsweise ist sowohl bei einer Haltevorrichtung 10 gemäß einem der vorstehend beschriebenen Ausführungsbeispiele als auch bei einer konventionellen Haltevorrichtung einsetzbar, um den Freiraum unter dem Adapter 25 zu vergrößern und somit längliche Objekte mit einem übergroßen Enddurchmesser aufnehmen zu können.

Zusammenfassend ist festzuhalten, dass durch die beschriebenen Maßnahmen in vorteilhafter Art und Weise eine Haltevorrichtung 10 geschaffen wird, welche es ermöglicht, dass zwischen dem unteren Rand des Adapters 25 und der Transportfläche 8 ein größerer Freiraum vorhanden ist, so dass mit der beschriebenen Haltevorrichtung 10 auch längliche Objekte mit einem übergroßen Enddurchmesser einfacher transportiert werden können.

## Patentansprüche

1. Vorrichtung zum Halten eines Endes eines länglichen Objekts, insbesondere einer selbsttragenden Last, die ein Grundgestell (11) aufweist, an dem eine Halterung, an welcher das längliche Objekt befestigbar ist, verschwenkbar angeordnet ist, und die mindestens eine Betätigungseinrichtungseinrichtung aufweist, durch welche die Halterung relativ zu dem auf einer Transportfläche (8) eines Transportfahrzeugs (1) angeordneten Grundgestell (11) schwenkbar ist, wobei die Halterung einen gegenüber dem Grundgestell (11) verschwenkbaren Rahmen (20) und einen daran anordbaren oder angeordneten Adapter (25), der mit einem Ende des zu transportierenden länglichen Objekts verbindbar ist, aufweist, **dadurch gekennzeichnet, dass** durch eine Änderung der Winkellage der den Rahmen (20) aufnehmenden Längsträger (11a, 11b) des Grundgestells (11) relativ zur Transportfläche (8) des Transportfahrzeugs (1) und/oder durch eine außermittige Anordnung des Adapters (25) am Rahmen (20) die Anordnung des Adapters (25) relativ zur Transportfläche (8) höhenveränderbar ist.

2. Vorrichtung nach Anspruch 1, **dadurch gekennzeichnet, dass** mindestens ein Längsträger (11a, 11b) des Grundgestells (11) der Haltevorrichtung (10) um eine parallel zur Transportfläche (8) verlaufende Schwenkachse (14) verschwenkbar ist.

3. Vorrichtung nach einem der vorangehenden Ansprüche, **dadurch gekennzeichnet, dass** die Haltevorrichtung (10) mindestens ein teleskopierbares Element (18; 31a, 31b) aufweist, mittels dessen mindestens ein Längsträger (11a, 11b) des Grundgestells um die Schwenkachse (14) verschwenkbar ist.

4. Vorrichtung nach einem der vorangehenden Ansprüche, **dadurch gekennzeichnet, dass** mindestens ein den Rahmen (20) verschwenkendes teleskopierbares Element (18; 31a, 31b) am Basiselement (11c) des Grundgestells (11) angelenkt ist.

5. Vorrichtung nach einem der vorangehenden Ansprüche, **dadurch gekennzeichnet, dass** der Rahmen (20) mindestens zwei Öffnungen aufweist, durch welche eine Schwenkachse (12') der Schwenkverbindung (12) hindurchführbar ist.

6. Vorrichtung nach einem der vorangehenden Ansprüche, **dadurch gekennzeichnet, dass** der Transportrahmen (20) an einem Exzenter (40) angeordnet ist, und dass der Exzenter (40) um die Schwenkachse (12') der Schwenkverbindung (12) schwenkbar ist.

7. Vorrichtung nach einem der vorangehenden Ansprüche, **dadurch gekennzeichnet, dass** der Transportrahmen (20) einen Grundrahmen (20a) und einen entlang diesem verschiebbaren Verschieberahmen (20b) aufweist.

8. Vorrichtung nach Anspruch 7, **dadurch gekennzeichnet, dass** der Grundrahmen (20a) und/oder der Verschieberahmen (20b) Arretiermittel aufweisen, mittels derer der Verschieberahmen (20b) in mindestens zwei unterschiedlichen Höhenpositionen außermittig am Grundrahmen (20a) befestigbar ist.

9. Vorrichtung nach einem der vorangehenden Ansprüche, **dadurch gekennzeichnet, dass** unter dem Grundgestell (11) eine Zwischenplatte (50) angeordnet ist.

10. Fahrzeug zum Transport eines länglichen Objekts, welches eine Vorrichtung zum Halten eines Endes des länglichen Objekts aufweist, **dadurch gekennzeichnet, dass** die Haltevorrichtung (10) nach einem der Ansprüche 1 bis 9 ausgebildet ist.
